# EUROPEAN PATENT SPECIFICATION

(11) **EP 1 010 572 B1**
(45) Date of publication and mention of the grant of the patent: **03.03.2004**
(21) Application number: 99125130.7
(22) Date of filing: 16.12.1999
(51) Int. Cl.: B60N 2/16, F16H 25/24

(54) **Lifter apparatus for vehicle**
Vorrichtung zur Höhenverstellung für Kraftfahrzeuge
Dispositif élévateur pour véhicule

(30) Priority: 17.12.1998 JP 35970298
(43) Date of publication of application: 21.06.2000
(73) Proprietor: Ikeda Bussan Co., Ltd., Ayase-shi Kanagawa-ken (JP)
(72) Inventor: Niikura, Naoki, c/o Ikeda Bussan Co., Ltd., Ayase-shi, Kanagawa-ken (JP); Ohmori, Hiroya, c/o Ikeda Bussan Co., Ltd., Ayase-shi, Kanagawa-ken (JP)
(74) Representative: Grünecker, Kinkeldey, Stockmair & Schwanhäusser Anwaltssozietät

(56) References cited:
- EP-A- 0 427 573
- US-A- 5 292 164
- US-A- 5 337 995
- US-A- 5 709 363
- US-A- 5 711 184
- US-A- 5 797 293
- US-A- 5 806 824

## Description

### BACKGROUND OF THE INVENTION

### 1. Field of the Invention

The present invention relates to a lifter apparatus for a vehicle seat according to the preamble of claim 1.

### 2. Description of Relevant Art

A seat of a vehicle is provided with a lifter apparatus which moves a seat cushion up and down to adjust a viewpoint height of a sitting person or feeling of sitting. Such a vehicle seat assembly is disclosed, for example, in US 5,337,995. In this kind of the lifter apparatus, a shaft to be rotated is provided between a pair of movable rails which are fixed to both sides of a seat cushion and a lever which is mounted to an end portion of the shaft. The shaft is fixed with a pair of bracket pieces to rotate the shaft in itself. These bracket pieces each are formed with a supporting opening of the same size, and a nut in a cylindrical shape is previously mounted in the supporting openings with the nut passing through supporting openings. The nut is screwed by a lead screw which projects from a motor fixed on a side of the movable rail. When the lead screw is rotated, the bracket pieces swing forward and backward, the shaft is rotated in a direction where the bracket pieces swing. A spacer is mounted to a tip end of the lead screw which passes through the nut, the spacer to prevent the nut from coming off.

### SUMMARY OF THE INVENTION

In this conventional structure, however, a lead screw is screwed to a nut while rotating, the nut being previously mounted between bracket pieces, and an operation which is screwing the nut and the lead screw together takes much work.

That is, in a small space below a seat, the lead screw is screwed to the nut while rotating by hands or temporarily rotating by a motor supplied with electricity, and an operation is difficult and needs skill.

Further, after the lead screw is screwed to the nut, in the small space below the seat, a operation in which a stopper is mounted to a tip end of the lead screw passing through the nut must be also performed. This point causes the operation difficult.

An object of the invention is to provide a lifter apparatus in which, in a small space below a seat, it is not necessary for a lead screw to be screwed to a nut and for a stopper to be mounted to a tip end of a lead screw, thus having excellent operatability.

To achieve this object, from a first aspect of the invention, there is provided a lifter apparatus for a vehicle seat according to claim 1.

Preferably, the lifter apparatus further has a spacer fittingly mounted between the nut and a wall defining the second opening.

Preferably, the lifter apparatus further has a ring member which is provided between the nut and the spacer.

Preferably, the lifter apparatus further has a shaft to be rotated connecting to the second bracket. The shaft has a side face. The second bracket has a connecting portion in a shape corresponding to the side face. The connecting portion is fixed to the shaft.

From a second aspect of the invention, there is provided an assembling method of a lifter apparatus for an above vehicle seat according to claim 5.

Preferably, the assembling method further has the step of: fittingly mounting a spacer between the nut and a wall defining the second opening.

According to the invention, since a size of a second opening formed to a second bracket is large, a nut in an inclined position is inserted in the large size opening. After inserting in an inclined position, the nut is rotated between a first bracket and the second bracket, so that passing through a first opening of the first bracket. The nut is passed through both openings while rotating, and the nut and a stopper is previously mounted to a lead screw at a place different from a seat. Therefore, it is not necessary for a lead screw to be screwed to a nut and for a stopper to be mounted to a tip end of a lead screw in a small space below a seat, such as a conventional , and operatabilty is excellent.

There is provided a ring member contacting with a nut inside a space, and the nut and the ring member line contact together. Therefore contacting state is stable, thus preventing noise from generating.

A first and a second brackets are integrated together through a connecting portion, and a space between the two brackets is constant, thus making passing state of the nut in openings reliable.

### BRIEF DESCRIPTION OF THE ACCOMPANYING DRAWINGS

The above and further objects and novel features of the present invention will more fully appear from the following detailed description when the same is read in conjunction with the accompanying drawings, in which:
Fig. 1 is a schematic side view of a front seat in which a lifter apparatus according to an embodiment of the invention is assembled;
Fig. 2 is an exploded perspective view which shows a structure around a shaft to be rotated;
Fig. 3 is a cross sectional view which shows a state where an end portion of a nut in an inclined position is inserted in a large supporting opening of a bracket piece;
Fig. 4 is a cross sectional view which shows a state where other end portion of a nut is rotated to have a horizontal position; and
Fig. 5 is a cross sectional view which shows a state where a nut is passed through supporting openings and a spacer is fittingly mounted.

### DETAILED DESCRIPTION OF THE PREFERRED EMBODIMENTS

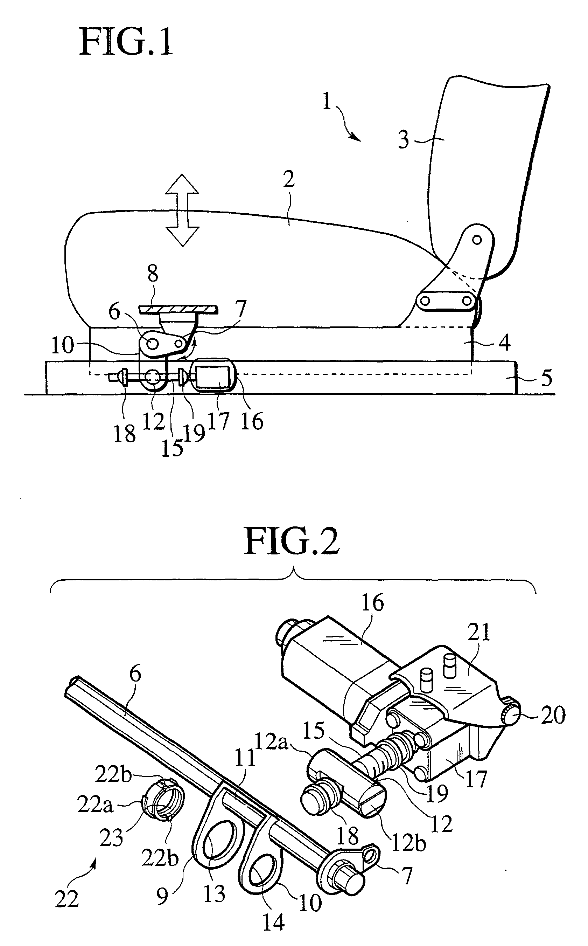

A preferable embodiment of the invention is explained according to Figs. 1 to 5.

In Fig. 1, a front seat 1 of a vehicle has a seat cushion 2 and a seat back 3. A movable rail 4 is fixed to a lower face of the seat cushion 2 and a stationary rail 5 is fixed on a floor of a vehicle body. The movable rail 4 is slidably engaged with the rail 5, and the front seat 1 is moved forward and backward.

Between right and left movable rails 4, a shaft 6 to be rotated is provided along a widthwise direction of a vehicle. To both end portions of the shaft 6A, a lever 7 is fixed. At a tip end of the lever 7, there is rotatably supported a base 8 which supports a lower face of the seat cushion 2. Therefore, rotating the shaft 6 moves the base 8 up and down, and the seat cushion 2 on the base 8 moves up and down with the base 8, thus achieving a lifter function.

Next, mechanism to rotate a shaft 6 is explained. To the shaft 6, there are fixed a pair of bracket pieces 9, 10 facing each other at a predetermined interval. A bracket piece 9 corresponds to a second bracket and a bracket piece 10 corresponds to a first bracket. Both bracket pieces 9, 10 are integrated together through a connecting portion 11 which has a section in a curved-shape corresponding to a side face of the shaft 6. The connecting portion 11 is fixed to the side face of the shaft 6 by screwing means as not shown in Figs. The two bracket pieces 9, 10 are integrated together through the connecting portion 11, and an interval between bracket pieces 9, 10 is always constant.

One bracket piece 9 of two bracket pieces 9, 10 is formed with a supporting opening 13, or second opening, of a size larger than a diameter of nut 12 as described later. The other bracket piece 10 is formed with a supporting opening 14, or first opening, of approximately the same size as the nut 12. The nut 12 in a cylindrical shape is passed through both supporting openings 13, 14 and is previously mounted to a lead screw 15 at a place which is different from a front seat 1.

Next, as shown in Fig. 2, a lead screw 15 projects from motor 16 through a gear unit 17. To this lead screw 15, a nut 12 in a cylindrical shape is previously screwed. To a tip end and a base end of the lead screw 15, there are mounted by caulking stoppers 18, 19 which prevent the nut 12 from coming off and from moving. Assembly operation for these nut 12 and stoppers 18, 19 is not necessary to be performed in a small space below a seat cushion 2, and operatability is excellent. A motor 16 and a gear unit 17 are mounted to a stationary fittings 21 through a hinge 20. After the nut 12 is passed through bracket pieces 9, 10, the fittings 21 is fixed to a reinforcing member ( not shown in Figs) which is provided in an inclined position between a movable rail 4 and a cross-member, the cross-member ( not shown in Figs ) being mounted to a front end of a movable rail 4.

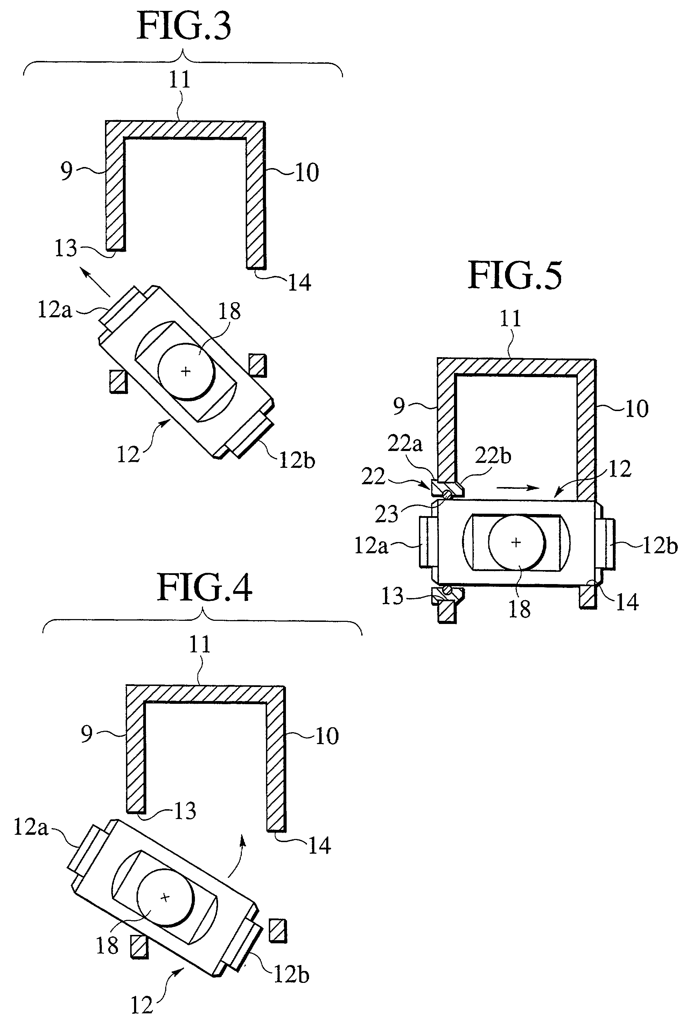

Next, a procedure is explained hereinafter according to Figs 3 to 5 that there are mounted a pair of bracket pieces 9, 10 to a thing in which a nut 12 and stoppers 18, 19 are previously mounted to a lead screw 15.

At first, one end portion 12a of a nut 12 is inserted from a lower side between both bracket pieces 9, 10. The end portion 12a in an inclined position is inserted in a supporting opening 13 of a large size ( refer to Fig. 3). A size of the supporting opening 13 is previously set so as for a end portion 12a of a nut 12 to be inserted in an inclined position. Next, the end portion 12a is further inserted in the supporting opening 13. The other end portion 12b is arranged between bracket pieces 9, 10 and the nut 12 is rotated to have a horizontal position (refer to Fig. 4). After having a horizontal position, the nut 12 is slid to a side of the other end portion 12b, thus being inserted in a supporting opening 14 of the same size as the nut 12 (refer to Fig. 5).

According to this, a nut 12 passes through each supporting opening 13, 14, and a stationary fittings 21 on a side of a motor 16 is fixed to a reinforcing member ( not shown in Figs) on a side of a movable rail 4. Next, as shown in Fig. 5, a resin-made spacer 22 in a ringed-shape is fitted between a end portion 12a of a nut 12 and a supporting opening 13. The spacer 22 has a side face which is formed with a projection 22a in an arc shape. An edge portion of the opening 13 is held between the arc-shaped projection 22a and an elastic claw 22b which is formed at a position in opposition to the spacer 22. A metal ring 23 is provided to an inner face of the spacer 22. Therefore, the nut 12 and the metal ring 23 are line contacted together, and contacting state between the both members is stable, thus preventing noise from generating. While the nut 12 is free in a passing direction of the openings 13, 14, the fittings 21 is fixed to a reinforcing member ( not shown in Figs ) so as to be set at a position, and thus preventing the nut 12 from coming off out of the openings 13, 14. Further, since the nut 12 is free in a passing direction, and if a mounting position of the fittings 21 had a little error, the error was allowable. When a lead screw 15 rotating, a clearance in a passing direction of the nut 12 is allowable.

In this manner, after mounting a nut 12, when a lead screw is rotated by a motor 16, bracket pieces 9, 10 swing forward and backward. Therefore, a shaft 6 is rotated in a swinging direction, and a lever 7 at an end portion of it is rotated, thus moving a seat cushion 2 up and down. Though a position of the nut 12 moves up and down when swinging the bracket pieces 9, 10 forward and backward, a motor 16, a gear unit 17, and a lead screw 15 are connected to a fittings 21 through a hinge 20, thus dealing with change of a vertical position of the nut 12.

In the above-described, though a base 8 supporting a seat cushion 2 is moved up and down by a lever 7 which is mounted to an end portion of a shaft 6, the embodiment is not restricted within this. Any structures to move a seat cushion up and down may be adapted.

While preferred embodiments of the present invention have been described using specific terms, such description is for illustrative purposes, and it is to be understood that changes and variations may be made without departing from the spirit or scope of the following claims.

## Claims

1. A lifter apparatus for a vehicle seat (1), comprising:
a lead screw (15) to be rotated in a direction;
a nut (12) screwed to the lead screw (15);
first and second brackets (10, 9) to be swung by rotating the lead screw (15) so as to move a seat (1) up and down, the first bracket (10) having a first opening (14), the second bracket (9) having a second opening (13), the nut (12) being fitted in the first and second openings (14,13), **characterized in that** the second opening (13) is of a size larger than that of the first opening (14), the second opening (13) to pass the nut (12) in an inclined position therethrough.

2. A lifter apparatus according to claim 1, further comprising:
a spacer (22) fittingly mounted between the nut (12) and a wall defining the second opening (13).

3. A lifter apparatus according to claim 2, further comprising:
a ring member (23) provided between the nut (12) and the spacer (22).

4. A lifter apparatus according to claim 1, further comprising:
a shaft (6) to be rotated connecting to the second bracket (9), the shaft (6) having a side face,
wherein the second bracket (9) has a connecting portion (11) in a shape corresponding to the side face, the connecting portion (11) is fixed to the shaft (6).

5. An assembling method of a lifter apparatus for a vehicle seat (1) of claim 1, **characterized by** the steps of:
inserting the nut (12) in an inclined position through the second opening (13) of the second bracket (9);
rotating the nut (12) to have a horizontal position; and
sliding the nut (12) into the first opening (14) of the first bracket (10).

6. An assembling method according to claim 5, further comprising:
fittingly mounting a spacer (22) between the nut (12) and a wall defining the second opening (13).

## Patentansprüche

1. Hebevorrichtung für einen Fahrzeugsitz (1), die umfasst:
eine Leitspindel (15), die in einer Richtung zu drehen ist;
eine Mutter (12), die auf die Leitspindel (15) geschraubt ist;
eine erste und eine zweite Halterung (10, 9), die geschwenkt werden, indem die Leitspindel (15) gedreht wird, um den Sitz (1) nach oben und nach unten zu bewegen, wobei die erste Halterung (10) eine erste Öffnung (14) hat, die zweite Halterung (9) eine zweite Öffnung (13) hat, die Mutter (12) in die erste und die zweite Öffnung (14, 13) eingepasst ist, **dadurch gekennzeichnet, dass** die zweite Öffnung (13) größer ist als die erste Öffnung (14), wobei die zweite Öffnung (13) die Mutter (12) in einer geneigten Position durchlässt.

2. Hebevorrichtung nach Anspruch 1, die des Weiteren umfasst:
einen Abstandshalter (22), der passend zwischen der Mutter (12) und einer Wand angebracht ist, die die zweite Öffnung (13) aufweist.

3. Hebevorrichtung nach Anspruch 2, die des Weiteren umfasst:
ein Ringelement (23), das zwischen der Mutter (12) und dem Abstandshalter (22) vorhanden ist.

4. Hebevorrichtung nach Anspruch 1, die des Weiteren umfasst:
eine Welle (6), die mit der zweiten Halterung (9) verbunden zu drehen ist, wobei die Welle (6) eine Seitenfläche hat,
wobei die zweite Halterung (9) einen Verbindungsabschnitt (11) in einer Form hat, die der Seitenfläche entspricht, und der Verbindungsabschnitt (11) an der Welle (6) befestigt ist.

5. Verfahren zum Zusammenbauen einer Hebevorrichtung für einen Fahrzeugsitz (1) nach Anspruch 1, **gekennzeichnet durch** die folgenden Schritte:
Einführen der Mutter (12) in einer geneigten Position **durch** die zweite Öffnung (13) der zweiten Halterung (9);
Drehen der Mutter (12), so dass sie eine horizontale Position einnimmt; und
Schieben der Mutter (12) in die erste Öffnung (14) der ersten Halterung (10).

6. Verfahren zum Zusammensetzen nach Anspruch 5, das des Weiteren umfasst:
passendes Anbringen eines Abstandhalters (22) zwischen der Mutter (12) und einer Wand, die die zweite Öffnung (13) aufweist.

## Revendications

1. Dispositif élévateur pour un siège (1) de véhicule, comprenant :
une tige filetée (15) destinée à être mise en rotation selon un sens ;
un écrou (12) vissé sur la tige filetée (15);
des première et seconde brides(10, 9) destinées à être basculées en faisant tourner la tige filetée (15), de manière à déplacer un siège (1) vers le haut et vers le bas, la première bride (10) présentant une première ouverture (14), la seconde bride (9) présentant une seconde ouverture (13), l'écrou (12) étant installé dans les première et seconde ouvertures (14, 13), **caractérisé en ce que** la seconde ouverture (13) est d'une taille supérieure à celle de la première ouverture (14), la seconde ouverture (13) permettant de faire passer, à travers elle, l'écrou (12) en position inclinée.

2. Dispositif élévateur selon la revendication 1, comprenant, en outre :
une pièce intercalaire (22) montée en insertion entre l'écrou (12) et une paroi définissant la seconde ouverture (13).

3. Dispositif élévateur selon la revendication 2, comprenant, en outre :
un élément annulaire (23) disposé entre l'écrou (12) et le dispositif d'écartement (22).

4. Dispositif élévateur selon la revendication 1, comprenant, en outre :
un arbre (6) destiné à être mis en rotation, en se raccordant à la seconde bride(9), l'arbre (6) présentant une face latérale,
dans lequel la seconde bride (9) comporte une partie de raccordement (11) dont la forme correspond à la face latérale, la partie de raccordement (11) étant fixée à l'arbre (6).

5. Procédé d'assemblage d'un dispositif élévateur pour un siège (1) de véhicule selon la revendication 1, **caractérisé par** les étapes consistant à :
insérer l'écrou (12) en position inclinée à travers la seconde ouverture (13) de la seconde bride (9) ;
faire tourner l'écrou (12) pour occuper une position horizontale ; et
faire glisser l'écrou (12) dans la première ouverture (14) de la première bride (10).

6. Procédé d'assemblage selon la revendication 5, comprenant, en outre :
le montage en insertion d'une pièce intercalaire (22) entre l'écrou (12) et une paroi définissant la seconde ouverture (13).
